# DEMANDE DE BREVET EUROPEEN

(11) **EP 0 899 013 A1**
(43) Date de publication de la demande: **03.03.1999**
(21) Numéro de dépôt: 98402060.2
(22) Date de dépôt: 14.08.1998
(51) Int. Cl.: B01J 23/40

(54) **Nouveau catalyseur utilisable dans les réactions de transformation de composés organiques**

(30) Priorité: 29.08.1997 FR 9710879
(71) Demandeur: INSTITUT FRANCAIS DU PETROLE, 92500 Rueil Malmaison (FR)
(72) Inventeur: Didillon, Blaise, 92500 Rueil Malmaison (FR); Uzio, Denis, 78160 Marly Le Roi (FR); Merlen, Elisabeth, 92500 Rueil Malmaison (FR); Pages, Thierry, 92500 Rueil Malmaison (FR)
(74) Mandataire: Andreeff, François

(57) **Abrégé**

On décrit un nouveau catalyseur comprenant au moins un support et au moins un métal du groupe VIII de la classification périodique et caractérisé en ce que les particules métalliques déposées sur le support ne sont pas isolées les unes par rapport aux autres.

## Description

La présente invention concerne un nouveau catalyseur comprenant au moins un support et au moins un métal du groupe VIII de la classification périodique et caractérisé en ce que les particules métalliques déposées sur le support ne sont pas isolées les unes par rapport aux autres.

Les catalyseurs métalliques supportés sont constitués d'un métal actif pouvant être par exemple au moins un métal noble tel que le platine ou le palladium, déposé sous forme de particules sur un support.

L'influence de la taille des particules sur l'activité des catalyseurs a largement été débattue dans la littérature pour un grand nombre de réactions de transformations d'hydrocarbures.

Pour un certain nombre de réactions, telles que par exemple les réactions d'hydrogénation de l'éthylène, du propylène, du cyclopentène, du benzène sur des métaux tels que le platine ou le palladium supportés peu d'influence de la taille des particules sur l'activité spécifique des catalyseurs est observée (J.C. Schlatter, M. Boudart, J. CATAL. 24 (1972) 482, Y. Hadj Romdhane, B. Bellamy, V. De Gouveia, A. Masson, M. Che, APPL. SURF. SCI. 173 (1986) 383, M. Boudart, W.C. Cheng, J. CATAL. 106 (1987) 134, J.M. Basset, G. Dalmai-lmelik, M. Primet, R. Martin, J. CATAL. 37 (1975) 22).

L'activité spécifique correspond à l'activité du catalyseur ramené au nombre d'atomes métalliques accessibles aux molécules à transformer. Le nombre d'atomes métalliques accessibles peut être déterminé par des techniques de chimisorption de molécules sondes (oxygène, hydrogène, monoxyde de carbone) ou à partir de la taille des particules déterminée par microscopie électronique. Ces différentes techniques sont parfaitement connues par l'homme du métier.

L'activité spécifique peut aussi être appelé Nombre de rotation ou " Turn over Frequency " (TOF). Pour de telles réactions et afin d'augmenter l'activité globale du catalyseur pour une quantité de métal donnée, on aura donc intérêt à disperser au mieux le métal sur le support et donc à travailler avec un catalyseur présentant des particules les plus petites possibles.

Pour d'autres réactions, les choses sont sensiblement différentes. Par exemple pour l'hydrogénation des alcynes ou de dioléfines conjuguées, il a été montré que l'activité spécifique des catalyseurs à base de palladium augmentait lorsque la taille des particules augmentait. Dans ce cas, l'optimum d'activité du catalyseur se situe pour des tailles de particules voisines de 4 nm (J.P. Boitiaux, J. Cosyns, S. Vasudevan, APPL. CATAL. 6 (1983) 41).

Ces différents exemples montrent que la taille des particules est un paramètre fondamental qui conditionne fortement l'activité des catalyseurs métalliques supportés.

On a maintenant découvert, et ceci fait l'objet de la présente invention, que lorsque les particules métalliques ne sont pas déposées de façon isolée sur le support, elles présentent une activité supérieure à celle des particules de même taille mais déposées de façon isolée sur le support.

L'état d'agrégation des particules est caractérisé par une analyse par microscopie du catalyseur après réduction de la phase active à des températures généralement comprises entre 20 et 500 °C. Pour le catalyseur selon l'invention, l'analyse par microscopie montre qu'au moins 50 % des particules et de préférence au moins 70 % des particules présentes sur le support présentent un point de contact avec au moins une autre particule. Les particules peuvent être indifféremment disposées sous forme de grappes, d'agglomérats, de chapelets ou toute autre configuration pour laquelle de préférence au moins 50 % des particules et plus avantageusement au moins 70 % des particules ont au moins un point de contact avec au moins une autre particule. Autrement dit, la proportion des particules isolées est de préférence de moins de 50 % et plus avantageusement de moins de 30 %.

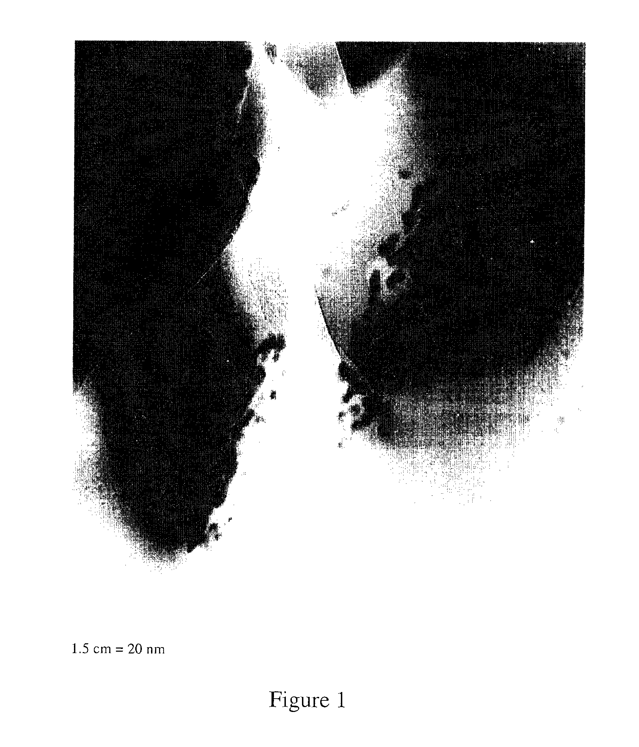

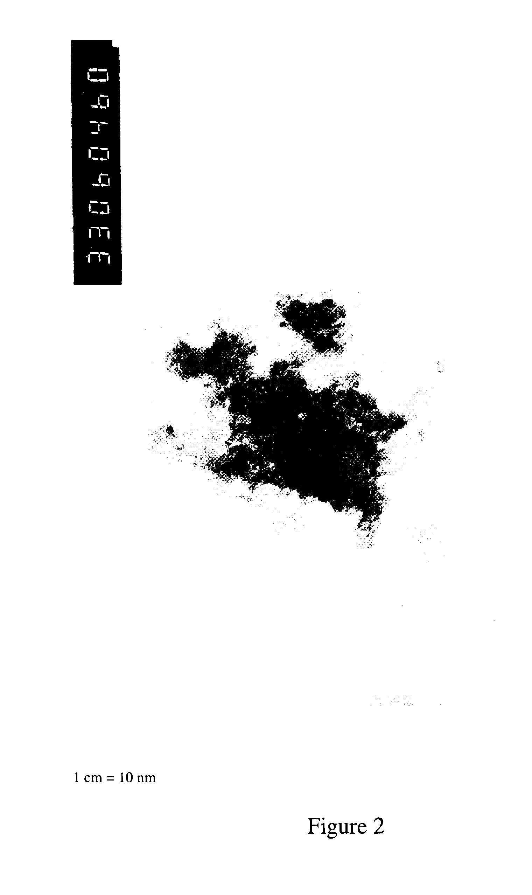

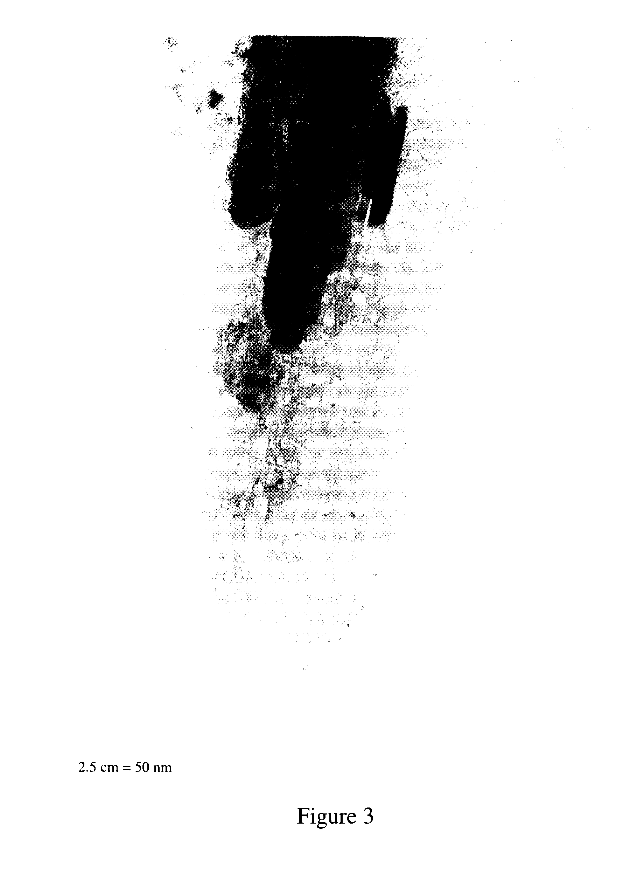

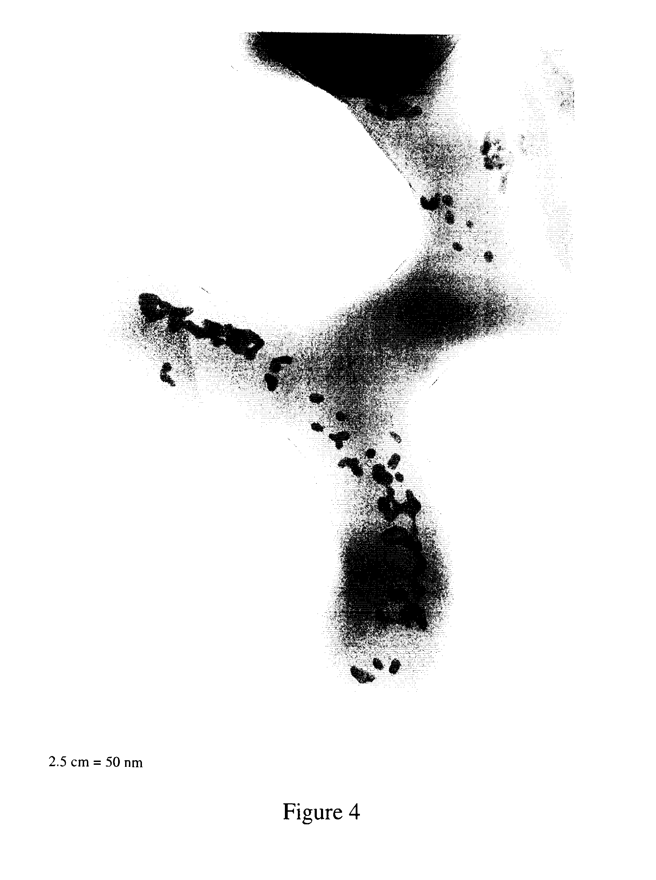

Pour illustrer l'invention, un ensemble de clichés représentatifs de catalyseurs selon l'invention sont donnés en annexe. Les Figures 1, 2 et 4 montrent des agrégats de particules de formes variées. La Figure 3 est donnée à titre de comparaison et montre des particules isolées.

Plus particulièrement les catalyseurs selon la présente invention s'appliquent aux procédés d'hydrogénation de composés comportant des fonctions acétyléniques, oléfiniques, cétones, aldéhydes, acides, nitro et notamment aux procédés de purification des coupes oléfiniques par hydrogénation sélective. Les conditions généralement utilisées pour ce type de transformation sont une température comprise entre 25 et 250°C, une pression comprise entre 0,1 et 10 MPa et un rapport hydrogène sur charge (vol/vol) compris entre 1 et 150. La charge est généralement une coupe issue d'un procédé de craquage contenant de 2 à 12 atomes de carbone. Ce peut être aussi une charge issue d'un procédé de déshydrogénation de l'éthylbenzène pour la production de styrène. Dans ce cas, le phénylacétylène doit être éliminé. Les vitesses spatiales sont généralement comprises entre 0,1 et 50 h⁻¹ pour le traitement de charges liquides et 500 à 30 000 h⁻¹ pour le traitement de charges gazeuses.

Le support du catalyseur selon l'invention comporte au moins un oxyde réfractaire généralement choisi parmi les oxydes de magnésium, d'aluminium, de silicium, de zirconium, de thorium, pris seuls en mélange entre eux ou avec des oxydes d'autres éléments de la classification périodique. Le charbon, les silico-aluminates, les argiles ou tout autre composé pouvant servir comme support peut aussi être utilisé. Ce support peut être utilisé sous forme de poudre ou après mise en forme ; toutes techniques de mise en forme convient à l'invention.

Le catalyseur selon l'invention renferme aussi un métal du groupe VIII de la classification périodique. Ce métal est de préférence le platine, le palladium ou le nickel lorsque l'on dédie le catalyseur à la transformation de composés acétyléniques ou diéniques. A cette liste s'ajoute le ruthénium et le rhodium lorsque l'on dédie le catalyseur à la transformation de fonctions organiques contenant un hétéroatome, tel que l'oxygène ou l'azote.

L'introduction du métal se fait de façon à obtenir des particules dispersées sur un support de telle sorte qu'au moins 50 % des particules et de préférence au moins 70 % des particules présentent au moins un point de contact entre elles.

Une technique de préparation qui convient particulièrement est l'imprégnation d'une solution contenant des particules d'oxyde ou du métal à déposer en suspension. Le solvant pouvant être de l'eau ou un solvant organique. Afin d'augmenter les points de contact entre les particules, la solution peut contenir une concentration limitée en agent complexant permettant de la stabiliser, l'agent complexant n'étant toutefois pas indispensable.

Une autre technique de préparation consiste à imprégner une solution aqueuse d'un précurseur du métal à déposer, cette solution présentant des caractéristiques (pH, force ionique, concentration en sel) permettant d'atteindre la limite de stabilité du précurseur métallique. On peut par exemple citer, les solutions aqueuses de sels tels que l'acide hexahydroxyplatinique et le nitrate de palladium. Ces exemples ne sont pas limitatifs et ne doivent pas limiter la portée de l'invention.

Après dépôt du ou des éléments catalytiques par imprégnation des solutions, le catalyseur est généralement séché à 120°C, éventuellement calciné à des températures généralement comprises entre 120 °C et 500 °C et réduit à des températures comprises entre la température ambiante et 500 °C.

La teneur en métal du groupe VIII du catalyseur selon l'invention est généralement comprise entre 0,01 et 50 % poids. Cette teneur est adaptée suivant l'application envisagée.

Le catalyseur peut aussi contenir d'autres éléments tels que par exemple un métal alcalin, un métal alcalino-terreux, un métalloïde, tel que le soufre.

La description complète de toutes demandes, tous brevets et publications, cités ci-dessus et ci-dessous, et de la demande française correspondante 97/10.879, déposée le 29 août 1997 est incluse par référence dans la présente description.

Les exemples qui suivent illustrent l'invention sans toutefois en limiter la portée.

### Exemple 1 (comparatif).

Un catalyseur A est préparé à partir d'une alumine de surface spécifique de 9 m²/g et de volume poreux 0,6 ml/g. Ce support se présente sous forme de billes de 3 mm de diamètre. Ce support est imprégné par une solution bis-acétylacétonate de palladium dilué dans le toluène. Après imprégnation, le support est séché puis calciné à 300 °C et réduit à 750 °C.

La teneur finale en palladium est de 0,3 % poids. L'analyse par microscopie de ce catalyseur montre que les particules ont une taille moyenne de 6,5 nm. Ces particules sont isolées sur le support. Le catalyseur n'est donc pas conforme à l'invention. La proportion de palladium accessible aux molécules est mesurée par chimisorption de CO à température ambiante. Cette proportion est de 18 %.

### Exemple 2.

Un catalyseur B est préparé à partir du support décrit dans l'exemple 1. Ce support est imprégné par une solution de nitrate de palladium à pH 1,8. Le volume de solution utilisé est de 0,6 ml par gramme de support à imprégner.

Après imprégnation, le catalyseur est séché à 120 °C et calciné à 450 °C et réduit à 150 °C.

Le catalyseur final contient 0,3 % poids de palladium.

L'analyse par microscopie électronique du catalyseur B montre que les particules de palladium présentent un diamètre moyen de 6,5 nm. Pour ce catalyseur, les particules présentent des points de contact les unes par rapport aux autres. Seulement 15 % des particules sont isolées sur le support. Le catalyseur B est donc conforme à l'invention.

La proportion de palladium accessible aux molécules est mesurée par chimisorption de CO à température ambiante. Cette proportion est de 16 %.

### Exemple 3 (comparatif).

Un catalyseur C est préparé dans les conditions de l'exemple 2 mais en utilisant une solution de nitrate de palladium dilué dans l'acide nitrique à pH 0,8.

Le catalyseur final contient 0,3 % poids de palladium.

L'analyse par microscopie de ce catalyseur montre que les particules ont une taille moyenne de 2,0 nm. Ces particules sont isolées sur le support. Le catalyseur n'est donc pas conforme à l'invention. La proportion de palladium accessible aux molécules est mesurée par chimisorption de CO à température ambiante. Cette proportion est de 50 %.

### Exemple 4.

Un catalyseur D est préparé dans les conditions de l'exemple 3 mais le support présente, dans ce cas, une surface spécifique de 40 m²/g.

L'analyse par microscopie électronique du catalyseur montre que les particules de palladium présentent diamètre moyen de 2,0 nm. Pour ce catalyseur, les particules présentent des points de contact les unes par rapport aux autres. Seulement 20 % des particules sont isolées sur le support. Le catalyseur D est donc conforme à l'invention.

La proportion de palladium accessible aux molécules est mesurée par chimisorption de CO à température ambiante. Cette proportion est de 20 %.

### Exemple 5 (comparatif).

Un catalyseur E est préparé dans les conditions de l'exemple 4 sauf pour la température de réduction du catalyseur qui est portée à 600 °C au lieu de 150 °C.

L'analyse par microscopie électronique du catalyseur montre que les particules de palladium présentent un diamètre moyen de 5,0 nm. Pour ce catalyseur, les particules sont isolées sur le support. Le catalyseur E n'est donc pas conforme à l'invention.

La proportion de palladium accessible aux molécules est mesurée par chimisorption de CO à température ambiante. Cette proportion est de 18 %.

### Exemple 6.

Les différents catalyseurs préparés dans les exemples 1 à 5 sont soumis à un test d'hydrogénation d'un composé acétylénique, en réacteur discontinu, parfaitement agité, dans les conditions opératoires suivantes :
- Catalyseur : 1,5 g
- Pression d'hydrogène : 10 bar
- Température : 17 °C
- Volume de phénylacétylène : 13 ml
- Volume de n-heptane : 180 ml

L'analyse des échantillons liquides prélevés au cours du temps permet de déterminer l'activité du catalyseur dans les conditions expérimentales précitées. Les résultats donnés dans le tableau 1 sont exprimés en mole de phénylacétylène converti par minute et par gramme de catalyseur.

L'activité spécifique, telle que définie dans la présente description, correspond à l'activité du catalyseur ramenée à la quantité de palladium accessible aux molécules.

**Tableau 1**

| Catalyseur | % métal accessible | Taille des particules (nm) | Activité hydrogénante (moles· min⁻¹·g cata⁻¹) | Activité spécifique (moles· min⁻¹·at. Pd⁻¹) |
|---|---|---|---|---|
| A (comparatif) | 18 | 6,5 | 5,9 10⁻⁴ | 2 |
| B (selon l'invention) | 16 | 6,5 | 5,7 10⁻³ | 21 |
| C (comparatif) | 50 | 2,0 | 2,5 10⁻³ | 3 |
| D (selon l'invention) | 20 | 2,0 | 5,1 10⁻³ | 15 |
| E (comparatif) | 18 | 5,0 | 2,2 10⁻³ | 7 |

Ces résultats montrent que, indépendamment du pourcentage de palladium accessible et de la taille des particules, les catalyseurs selon l'invention présentent une activité hydrogénante et une activité spécifique au moins deux fois supérieures à celles des catalyseurs "comparatifs".

Les exemples qui précèdent peuvent être répétés avec des résultats analogues en substituant les réactifs et/ou les conditions générales ou particulières décrites dans l'invention à ceux mis en oeuvre dans ces exemples.

Au vu de la description qui précède, l'homme du métier peut aisément déterminer les caractéristiques essentielles de l'invention et, sans s'écarter de l'esprit et de la portée de celle-ci, y apporter divers changements ou modifications pour l'adapter à diverses utilisations et conditions de mise en oeuvre.

## Revendications

1. Catalyseur comprenant au moins un support et au moins un métal du groupe VIII de la classification périodique déposé sur ledit support, caractérisé en ce que les particules métalliques déposées sur le support ne sont pas isolées les unes par rapport aux autres.

2. Catalyseur selon la revendication 1 caractérisé en ce qu'au moins 50 % des particules métalliques présentes sur le support présentent un point de contact avec au moins une autre particule.

3. Catalyseur selon la revendication 1 caractérisé en ce qu'au moins 70 % des particules métalliques présentes sur le support présentent un point de contact avec au moins une autre particule.

4. Catalyseur selon l'une des revendications 1 à 3 caractérisé en ce qu'e son support comprend au moins un oxyde réfractaire choisi parmi les oxydes de magnésium, d'aluminium, de silicium, de zirconium, de thorium, pris seuls en mélange entre eux ou avec des oxydes d'autres éléments de la classification périodique, le charbon, les silico-aluminates et les argiles.

5. Catalyseur selon l'une des revendications 1 à 4, caractérisé en ce que sa teneur en métal du groupe VIII est comprise entre 0,01 et 50 % poids.

6. Utilisation d'un catalyseur selon l'une des revendications 1 à 5 dans un procédé d'hydrogénation de composés comportant des fonctions acétyléniques, oléfiniques, cétones, aldéhydes, acides ou nitro.

7. Utilisation d'un catalyseur selon l'une des revendications 1 à 5 dans un procédé de purification des coupes oléfiniques par hydrogénation sélective.

8. Utilisation selon l'une des revendications 6 et 7 dans laquelle on opère à une température comprise entre 25 et 250°C, sous une pression comprise entre 0,1 et 10 MPa et avec un rapport hydrogène sur charge (vol/vol) compris entre 1 et 150.

9. Utilisation selon l'une des revendications 6 à 8 dans laquelle la charge est une coupe issue d'un procédé de craquage contenant de 2 à 12 atomes de carbone.

10. Utilisation selon l'une des revendications 6 à 8 caractérisée en ce qu'on élimine par hydrogénation sélective le phénylacétylène dans une charge issue de la déshydrogénation de l'éthylbenzène en styrène.

11. Utilisation selon l'une des revendications 5 à 10 caractérisée en ce que les vitesses spatiales sont comprises entre 0,1 et 50 h⁻¹ pour le traitement de charges liquides et 500 à 30 000 h⁻¹ pour le traitement de charges gazeuses.

12. Utilisation selon l'une des revendications 6 à 11, caractérisée en ce que la réaction est une transformation de composés acétyléniques ou diéniques et le métal du groupe VIII du catalyseur est le platine, le palladium ou le nickel.

13. Utilisation selon l'une des revendications 6 à 11, caractérisée en ce que la réaction est une transformation de fonctions organiques contenant un hétéroatome tel que l'oxygène ou l'azote et le métal du groupe VIII du catalyseur est le ruthénium ou le rhodium.
